# EUROPÄISCHE PATENTSCHRIFT

(11) **EP 1 356 954 B1**
(45) Veröffentlichungstag und Bekanntmachung des Hinweises auf die Patenterteilung: **16.03.2005**
(21) Anmeldenummer: 03006585.8
(22) Anmeldetag: 24.03.2003
(51) Int. Cl.: B60B 3/14, B60B 3/16

(54) **Lackiertes Scheibenrad aus Blech für Kraftfahrzeuge und Vefahren für dessen Herstellung**
Painted disk wheel of sheet metal for motor vehicle and process for producing such a wheel
Roue laquée à disque de tôle pour véhicule à moteur et son procédé de production

(30) Priorität: 24.04.2002 DE 10218339
(43) Veröffentlichungstag der Anmeldung: 29.10.2003
(73) Patentinhaber: SÜDRAD GMBH RADTECHNIK, 73061 Ebersbach (DE)
(72) Erfinder: Fischbacher, Alfred, 83101 Rohrdorf (DE); Mansdörfer, Rolf-Dieter, 73061 Ebersbach (DE); Dehm, Siegbert, 73035 Göppingen (DE)
(74) Vertreter: Haug, Dietmar, Dipl.-Ing.

(56) Entgegenhaltungen:
- EP-A- 0 999 076
- WO-A-00/11238
- DE-A- 19 603 968
- DE-B- 1 144 139
- US-A- 5 542 753

## Beschreibung

Die Erfindung betrifft ein Scheibenrad aus Blech für Kraftfahrzeuge und ein Verfahren für dessen Herstellung gemäß dem Oberbegriff des Patentanspruches 1 bzw. 11.

Ein solches Scheibenrad ist aus der DE 11 44 139 bekannt. Bei dem bekannten Scheibenrad sind zwei in Umfangsrichtung der Radschüssel diametral angeordnete Erhabenheiten und zwei in Radialrichtung der Radschüssel diametral angeordnete Vertiefungen im Versenk vorgesehen. An den Erhabenheiten befindet sich der relativ höher liegende Oberflächenbereich, an dem die Radmuttern im montierten Zustand des Scheibenrades anliegen. Wenn das bekannte Scheibenrad durch eine Lackbeschichtung korrosionsgeschützt wird, ist anzunehmen, daß die Lackschicht auch im montierten Zustand des Scheibenrades an denjenigen Stellen des Versenks vorhanden ist, an denen die Radmuttern eine Auflage finden. Die beiden Kontaktflächen der Erhabenheiten erstrecken sich in Umfangsrichtung des Versenks ununterbrochen weit genug, damit die Spannungen in der Radschüssel aus der radialen Richtung entfernt und mehr in Umfangsrichtung der Radschüssel verteilt werden und die Forderung nach Zentrierung des Rades beim Festschrauben erfüllt ist. Die Erfüllung dieser Forderungen erfolgt bei einer Flächenpressung, die noch so niedrig ist, daß eine zwischen den Radmuttern und den Erhabenheiten des Versenks vorhandene Lackschicht beim Anziehen der Radmuttern erhalten bleibt. Aufgrund dieser Lackschicht zwischen den Radmuttern und den Erhabenheiten des Versenks kann es im Fahrbetrieb zum Lockern der Radmuttern kommen.

Ein Scheibenrad aus Blech für Kraftfahrzeuge ist auch aus der DE 196 03 968 A1 bekannt. Bei der Montage des Scheibenrades am Fahrzeug werden die Radmuttern oder Radschrauben mit einem vorbestimmten Drehmoment angezogen, wodurch eine Vorspannkraft in den Schraubenbolzen und eine entsprechend hohe Druckkraft zwischen den Anschlußaugen des Rades und der Radnabe entstehen.

Beim Drehen einer Radmutter oder einer Radschraube müssen das mit der Vorspannkraft steigende Reibungsmoment im Gewinde und das Reibungsmoment an den Kontaktflächen zwischen der Mutter oder dem Schraubenkopf und dem Versenk überwunden werden. Die Größe dieser Reibmomente ist von den an den aneinanderreibenden Flächen herrschenden Reibungszahlen abhängig, was zur Folge hat, daß bei gleichem Anzugsmoment die Vorspannkraft bei niedrigeren Reibungszahlen höher als bei höheren Reibungszahlen ist.

Die Größe der Schraubenvorspannkraft und damit der Druckkraft zwischen dem Anschlußauge und der Radnabe soll bei einem festgelegten Anzugsmoment aber innerhalb vorbestimmter Grenzen liegen, denn eine zu hohe Schraubenvorspannkraft verringert die Elastizität des Rades mit der Folge, daß sich die Radmuttern oder Radschrauben bei dynamischer Belastung im Fahrbetrieb lockern können. Eine zu geringe Schraubenvorspannkraft kann ebenfalls zu einer Lockerung der Radmuttern oder Radschrauben bei dynamischer Belastung im Fahrbetrieb führen.

Die die Reibungszahlen der Kontaktflächen der Radmuttern oder Radschrauben und des Versenks verändernden Einflüsse oder Maßnahmen können die Schraubenvorspannkraft und damit die Druckkraft gefährlich stark erhöhen oder vermindern. Entsprechendes gilt für die die Reibungszahl der Gewinde der Radmuttern oder Radschrauben verändernden Einflüsse oder Maßnahmen. Reibungszahlerhöhend wirkt sich z.B. Rost an den sich kontaktierenden Flächen der Radmuttern oder Radschrauben, des Versenks und der Gewinde aus.

Werden die Radmuttern oder Radschrauben in unzulässiger Weise mit Schmiermittel versehen, verringern sich die entsprechenden Reibungszahlen mit der Folge, daß bei gleichem Anzugsmoment eine höhere Schraubenvorspannkraft erhalten wird.

Lackierte Scheibenräder weisen im Versenkbereich einen Oberflächenschutz auf, der sich in der Regel aus einer Vorbehandlung in Form einer Zinkphosphatierung und einer Grundierung in Form eines kathodischen Elektrotauchlackes zusammensetzt. Eine derart geschützte Oberfläche des Versenkbereichs hat eine geringere Reibungszahl als eine unbehandelte, blanke Oberfläche, die zum Rosten neigen kann.

Radmuttern und Radschrauben sind an ihren nicht an den Versenken des Rades und den Gewinden anliegenden Flächen einem Angriff von Feuchtigkeit ausgesetzt und werden deshalb durch eine Oberflächenbeschichtung korrosionsgeschützt. Eine solche Oberflächenbeschichtung ist z.B. in der WO 00/11238 angegeben. Bei der Verwendung von durch eine Oberflächenbeschichtung korrosionsgeschützten Radmuttern oder Radschrauben zur Befestigung von lackierten Scheibenrädern kann es zu einer derartigen Verminderung der Reibungszahl an den Kontaktflächen zwischen den Radmuttern oder Radschrauben und dem Versenk kommen, daß die Schraubenvorspannkräfte so hohe Werte annehmen, daß die Elastizität des Rades in einem Maße verringert wird, daß es durch die dynamische Belastung im Fahrbetrieb zum Lockern der Schrauben oder Muttern kommen kann.

Darüberhinaus bewirkt die hohe Vorspannkraft einen sehr hohen Druck der Radmutter oder Radschraube auf die Lackschicht im Versenk. Durch die im Fahrbetrieb entstehende Erwärmung des Radnabenbereiches und den durch die Radmutter oder den Schraubenkopf auf die Lackschicht im Versenk aufgebrachten Druck kann es zu Instabilitäten in der Lackschicht des Versenks kommen. Dies hat eine weitere Reduzierung der Reibungszahl an den Kontaktflächen zwischen den Radmuttern oder den Schraubenköpfen und dem Versenk des Anschlußauges bei lackierten Scheibenrädern zur Folge. Verringert sich aber die Reibungszahl nach der Montage des Rades auf diese Weise, kann es aufgrund der dynamischen Belastung des Verschraubungsbereiches während der Fahrt und der dem Scheibenrad eigenen Gesamtelastizität zu einem Lösen der Radschrauben oder Radmuttern kommen.

Die Verwendung von durch eine Oberflächenbeschichtung korrosionsgeschützten Radschrauben zur Befestigung von Leichtmetallgußrädern wie z.B. Aluminiumgußrädern, hat in der Regel keine die Lockerung der Radschrauben bewirkende Verringerung der Reibungszahl an den Kontaktflächen zwischen der Radschraube und des Versenks zur Folge, weil die Oberfläche beim Leichtmetallgußrad im Bereich der Radschraubenkopfaufnahme nicht mit einer Schutzschicht überzogen sondern nach der spanabhebenden Bearbeitung blank gelassen ist.

Aus wirtschaftlichen Gründen ist es sinnvoll, wenn die gleichen Radschrauben, die für Leichtmetallgußräder verwendet werden, auch für lackierte Scheibenräder aus Blech verwendet werden können. Die Verwendung von Radschrauben in gleicher Ausführung sowohl für Leichtmetallgußräder als auch für lackierte Scheibenräder aus Blech schließt auch die Möglichkeit aus, daß für Leichtmetallgußräder und lackierte Scheibenräder aus Blech unterschiedlich ausgeführte Radschrauben versehentlich oder mißbräuchlich für denjenigen Radtyp eingesetzt werden, für den sie gerade nicht hinreichend geeignet sind.

Die EP 0 999 076 A2 zeigt mit gerändelten Abschnitten versehene Stehbolzen, die an einer Radnabe befestigt werden, wobei die gerändelten Abschnitte der Stehbolzen an Gegenflächen der Radnabe anliegen, um die Stehbolzen drehfest mit der Radnabe zu verbinden. Das Rad und die auf die Stehbolzen aufzuschraubenden Radmuttern zur Befestigung des Rades an der Radnabe sind nicht gezeigt.

Die US-A-5 542 753 zeigt die Anordnung eines Einsatzstückes zwischen dem Versenk und einer Radmutter, die auf einen Stehbolzen aufgeschraubt wird, um ein Rad an einer Radnabe zu befestigen. Die Radmutter hat damit keinen direkten Kontakt mit der Oberfläche des Versenks.

Die Aufgabe der Erfindung besteht darin, das gattungsgemäße Scheibenrad bzw. dessen Herstellungsverfahren so zu gestalten, daß eine Lockerung der Radmuttern oder Radschrauben im Fahrbetrieb zuverlässig vermieden wird.

Die Aufgabe der Erfindung wird mit den Merkmalen des kennzeichnenden Teiles des Patentanspruches 1 bzw. 11 gelöst.

Demnach weist das erfindungsgemäße Scheibenrad mehr als zwei in Umfangsrichtung des Versenks verteilt angeordnete Erhabenheiten oder Vertiefungen auf.

Durch die erfindungsgemäße Strukturierung der Oberfläche eines jeden Versenks oder eines Teiles dieser Oberfläche und der erfindungsgemäßen Anordnung der Lackschicht nur auf solchen Flächen des Scheibenrades, die im montierten Zustand nicht in Kontakt mit den Radmuttern oder Radschraubenköpfen sind, ergibt sich an diesen unbeschichteten Kontaktflächen des Versenks eine Reibungszahl, die höher als die der Oberfläche der Lackschicht ist und im montierten Zustand des Rades, auch bei im Fahrbetrieb auftretender Erwärmung des Radnabenbereichs, im wesentlichen konstant bleibt. Die Folge einer höheren, aber im wesentlichen konstanten Reibungszahl an den Kontaktflächen des Versenks besteht darin, daß auch die Vorspannkraft und damit die Druckkraft zwischen den Anschlußaugen und der Radnabe im Fahrbetrieb im wesentlichen konstant bleiben und mit dem einmal festgelegten Anzugsmoment auch nach mehrmaligem Montieren und Demontieren des Rades in gleicher Größe reproduzierbar sind. Die Gefahr einer Lockerung der Radmuttern oder Radschrauben im Fahrbetrieb wird dadurch zuverlässig ausgeschaltet. Die erfindungsgemäße Einrichtung hat auch den Vorteil, daß bis zur erstmaligen Montage des Rades, die Lackschicht auch an den Schrauben- oder Mutterkontaktflächen des Versenks vorhanden sein kann, so daß das Scheibenrad vor der erstmaligen Montage auch an diesen Kontaktflächen korrosionsgeschützt ist. Dieser Vorteil kommt besonders dann zum Tragen, wenn das Scheibenrad nur als Reserverad eines ansonsten mit Aluminiumgußrädern bestückten Kraftfahrzeugs Verwendung findet und dieses Reserverad nie oder zum ersten Mal erst nach einigen Jahren Betriebsdauer des Kraftfahrzeugs zum Einsatz kommt.

Ein Vorteil des erfindungsgemäßen Verfahrens besteht darin, daß die Strukturierung der Oberfläche des Versenks oder eines Teiles davon im gleichen Arbeitsschritt wie die Bildung des Versenks mittels eines einzigen entsprechend geformten Werkzeugs vorgenommen werden kann. Ferner hat das erfindungsgemäße Verfahren den Vorteil, daß der Oberflächenschutzaufbau im Versenkbereich wie bisher über die gesamte Oberfläche des Versenks ununterbrochen durchgeführt werden kann, denn die Oberflächenbeschichtung an den späteren Schrauben- oder Mutterkontaktflächen des Versenks kann bis zur ersten Montage des Rades erhalten bleiben. Das erfindungsgemäße Verfahren ist daher mindestens so wirtschaftlich wie das bisherige Herstellungsverfahren.

Das erfindungsgemäße Scheibenrad hat den Vorteil, daß es mit den gleichen Radschrauben oder Radmuttern an einem Kraftfahrzeug montiert werden kann, die auch zur Befestigung eines Aluminiumgußrades verwendet werden. Ist zum Beispiel ein Kraftfahrzeug mit Aluminiumgußrädern für den Sommerbetrieb bestückt, kann ein erfindungsgemäßes Scheibenrad als Reserverad oder als Winterrad benutzt werden, ohne daß auf andere Radmuttern oder Radschrauben als diejenigen, die für die Aluminiumgußräder verwendet werden, zurückgegriffen werden muß. Die Verwendung von sogenannten Einheitsschrauben sowohl für Aluminiumgußräder als auch lackierte Scheibenräder gemäß der Erfindung ist kostensparend und schützt auch vor einer versehentlichen oder mißbräuchlichen Vertauschung von verschieden ausgeführten Radmuttern oder Radschrauben.

Vorzugsweise wird der Lack von den Kontaktflächen der Erhabenheiten der strukturierten Oberfläche des Versenks durch die beim Anziehen der Radschrauben oder Radmuttern bei der Radmontage zwischen diesen und dem Lack entstehende Reibung abgetragen. Es ist daher vor der ersten Montage des Rades kein zusätzlicher Arbeitsschritt und kein zusätzliches Werkzeug für das Abtragen der Lackschicht von den Kontaktflächen der Erhabenheiten erforderlich. Durch die im Vergleich zu bisherigen Scheibenrädern verkleinerte Kontaktfläche zwischen Radschraubenkopf oder Radmutter und Versenk erhöht sich die Flächenpressung. Durch die Drehbewegung der Schraube oder Mutter und die zunehmende Schraubenvorspannkraft wird die Lackschicht auf den Erhabenheiten abgetragen, so daß nach Erreichen des vorbestimmten Anzugsmomentes die gewünschte Reibungszahl erhalten wird, die sich auch im Fahrbetrieb nicht mehr wesentlich verändert, so daß sich die Radmuttern oder Radschrauben im Fahrbetrieb nicht lösen können. Durch die Entfernung der Lackschicht an den Kontaktflächen des Versenks gibt es keine durch Erwärmung und Betriebsbelastungen sich destabilisierende Lackschicht zwischen dem Versenk und der Radschraube oder Radmutter. Ein Lösen der Radschrauben oder Radmuttern infolge der Destabilisierung der Lackschicht zwischen dem Versenk und den Schrauben oder Muttern ist damit ausgeschlossen.

Durch das Weglassen oder Abtragen einer Lackschicht an den Kontaktflächen des Versenks erhöht sich die Reibungszahl an diesen Kontaktflächen im Vergleich zu einer lackierten Oberfläche. Die Erhöhung der Reibungszahl bewirkt bei einem konstanten Anzugsmoment eine Verringerung der Vorspannkraft, die, wenn sie zu groß ist, das Versenk aufweiten würde, mit der Folge, daß es zur Rißbildung im Versenk kommen kann. Die Erhöhung der Reibungszahl durch Weglassen oder Entfernen der Lackschicht an den Kontaktflächen des Versenks ist daher vorteilhaft, da diese Reibungszahlerhöhung der Gefahr, daß beim Montieren des Rades ein zu hohes Drehmoment auf die Radschrauben oder Radmuttern aufgebracht wird, entgegenwirkt.

Nach dem ersten Anziehen der Radschrauben oder Radmuttern, bei dem die Lackschicht an den Kontaktflächen des Versenks abgetragen wird, kann es an den Erhabenheiten zu einer plastischen Verformung kommen, die ihrerseits das Material im Bereich der Erhabenheiten und lackfreien Kontaktflächen verfestigt. Die Verfestigung des Materials im Bereich der Erhabenheiten und lackfreien Kontaktflächen führt dazu, daß sich das zum Lösen der Radschrauben oder Radmuttern erforderliche Drehmoment erhöht. Die Gefahr des Lösens der Radschrauben oder Radmuttern im Fahrbetrieb wird daher durch die Verfestigung des Materials im Bereich der Erhabenheiten und lackfreien Kontaktflächen weiter verringert.

Die Erfindung wird nun anhand von verschiedenen, in den Zeichnungen dargestellten Ausführungsbeispielen näher erläutert. Es zeigen:
- Fig. 1: eine Draufsicht auf dem die Anschlußaugen aufweisenden radial inneren Bereich der Radschüssel eines Scheibenrades nach einem ersten Ausführungsbeispiel der Erfindung;
- Fig. 2: einen vergrößert dargestellten Schnitt entlang der Linie II-II in Fig. 1, zusammen mit der Ansicht einer Radschraube, die im Versenk des entsprechenden Anschlußauges angeordnet ist;
- Fig. 3: eine vergrößert und gebrochen dargestellte Draufsicht auf eines der Anschlußaugen der in Fig. 1 dargestellten Radschüssel;
- Fig. 4: einen dem Schnitt der Fig. 2 entsprechenden Schnitt entlang der Linie IV-IV in Fig. 3, jedoch ohne die in Fig. 2 dargestellte Radschraube;
- Fig. 5: einen vergrößerten Ausschnitt aus der in Fig. 3 ersichtlichen strukturierten Oberfläche des Versenks an der in Fig. 3 eingekreisten und mit einem Verweispfeil versehenen Stelle,
- Fig. 6: einen vergrößert und gebrochen dargestellten Schnitt entlang der Linie VI-VI in Fig. 5;
- Fig. 7 - 10: ähnliche Darstellungen wie die der Figuren 3 bis 6, wobei jedoch die strukturierte Oberfläche des Versenks gemäß einem zweiten Ausführungsbeispiel ausgebildet ist;
- Fig. 11 - 14: ähnliche Darstellungen wie die der Figuren 3 bis 6, wobei jedoch die strukturierte Oberfläche des Versenks gemäß einem dritten Ausführungsbeispiel ausgebildet ist;
- Fig. 15 - 18: ähnliche Darstellungen wie die der Figuren 3 bis 6, wobei jedoch die strukturierte Oberfläche des Versenks gemäß einem vierten Ausführungsbeispiel ausgebildet ist;
- Fig. 19 - 22: ähnliche Darstellungen wie die der Figuren 3 bis 6, wobei jedoch die strukturierte Oberfläche des Versenks gemäß einem fünften Ausführungsbeispiel ausgebildet ist; und
- Fig. 21 - 26: ähnliche Darstellungen wie die der Figuren 3 bis 6, wobei jedoch die strukturierte Oberfläche des Versenks gemäß einem sechsten Ausführungsbeispiel ausgebildet ist.

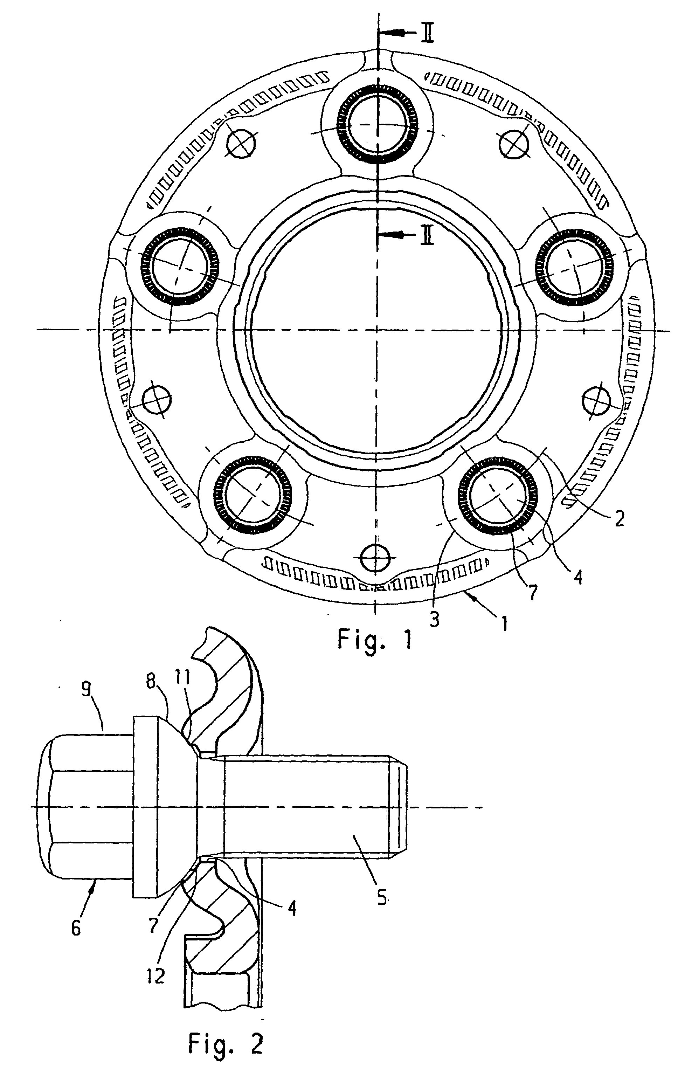

Es wird zunächst auf die Figuren 1 bis 6 Bezug genommen, die ein erstes Ausführungsbeispiel der Erfindung zeigen. Ein aus Stahlblech oder Aluminiumblech gefertigtes Scheibenrad für Kraftfahrzeuge weist eine auch als Radscheibe bezeichnete Radschüssel 1 auf, die an ihrem radial äußeren Rand mit einer nicht dargestellten Felge verschweißt ist. Fig. 1 zeigt den radial inneren Bereich der Radschüssel 1. In diesem Bereich befinden sich mehrere auf einem Lochkreis 2 in Umfangsrichtung gleichmäßig verteilt angeordnete Anschlußaugen 3, die jeweils ein Durchgangsloch 4 für den Durchtritt des Schaftes 5 einer Radschraube 6 haben. Mit den Radschrauben 6 wird das Rad an einer nicht dargestellten Radnabe des Kraftfahrzeuges befestigt. Zu diesem Zweck befinden sich in der Radnabe Gewindebohrungen, in welche die Schäfte 5 der Radschrauben 6 eingeschraubt werden, wodurch das Rad im Bereich der Anschlußaugen an die Radnabe gedrückt wird.

Um das Durchgangsloch 4 eines jeden Anschlußauges 3 herum ist auf der von der Radnabe des Kraftfahrzeuges abgewandten Außenseite der Radschüssel 1 ein Versenk 7 vorgesehen, das zur Aufnahme eines Zentrierbundes 8 des Kopfes 9 der Radschraube 6 bei der Montage des Rades am Fahrzeug dient.

Bei dem in den Figuren 1 bis 6 dargestellten ersten Ausführungsbeispiel weist die Radschüssel fünf Anschlußaugen 3 auf. Es versteht sich aber, daß die Anzahl der Anschlußaugen auch größer oder kleiner als fünf sein kann und ohne Bedeutung für die Erfindung ist.

Im dargestellten Ausführungsbeispiel sind eine der Zahl der Anschlußaugen entsprechende Anzahl von Radschrauben 6 für die Befestigung des Rades an der Radnabe des Kraftfahrzeuges vorgesehen. Die Befestigung des Rades an der Radnabe kann aber auch mittels an der Radnabe befestigter Stehbolzen und Radmuttern erfolgen, die auf die dann durch die Löcher der Anschlußaugen ragenden Stehbolzen aufgeschraubt werden.

Ferner versteht sich, daß die Befestigung des Scheibenrades an einer Bremstrommel statt an der Radnabe erfolgen kann, wenn das Fahrwerk des Kraftfahrzeuges an der Radbefestigungsstelle eine Bremstrommel anstelle einer Nabe aufweist. Die Verwendung des Begriffes "Radnabe" in der Beschreibung und den Patentansprüchen soll daher nicht heißen, daß das Scheibenrad nur an einer Radnabe befestigt werden kann, sondern es kann auch an einer Bremstrommel befestigt werden, wenn das Kraftfahrzeug eine Bremstrommel anstelle einer Radnabe aufweist.

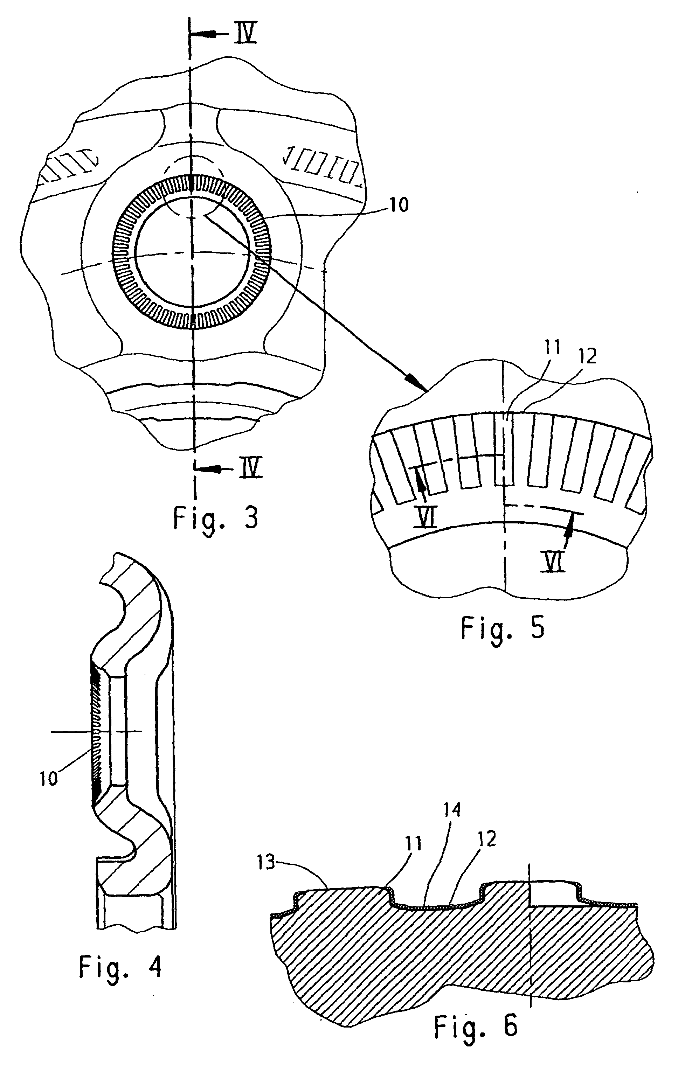

Erfindungsgemäß ist wenigstens ein Teil der Oberfläche eines jeden Versenks 7 durch nebeneinanderliegende Erhabenheiten und Vertiefungen strukturiert. Bei dem in den Figuren 1 bis 6 dargestellten Ausführungsbeispiel ist nur ein Teil der Oberfläche eines jeden Versenks 7 mit nebeneinanderliegenden Erhabenheiten und Vertiefungen strukturiert. Die strukturierte Oberfläche des Versenks 7 des in den Figuren 1 bis 6 dargestellten Ausführungsbeispiels ist in den Figuren 3 und 4 mit 10 bezeichnet.

Wie besonders aus den Figuren 5 und 6 ersichtlich ist, werden die Erhabenheiten des ersten Ausführungsbeispiels durch radial geradlinig verlaufende, flache Rippen 11 mit einem im wesentlichen rechteckigen Querschnitt gebildet. Die Rippen 11 wechseln sich in Umfangsrichtung mit Vertiefungen in Form von radial geradlinig verlaufenden, flachen Nuten 12 ab, die im Querschnitt U-förmig (siehe Fig. 6) und in der Draufsicht leicht konisch sind mit einer Breite, die am radial inneren Ende der Nut kleiner als an deren radial äußerem Ende ist. Die Rippen 11 sind in der Draufsicht im wesentlichen rechteckig, wie Fig. 5 zeigt. Die oberen Oberflächen 13 der Rippen 11 haben die Form eines Teiles der Oberfläche einer gedachten Kugel, deren Durchmesser identisch ist mit dem einer kugelförmigen Fläche, die am Zentrierbund 8 des Schraubenkopfes 9 der Radschraube 6 ausgebildet ist.

Im montierten Zustand des Rades liegt die kugelförmige Fläche des Zentrierbundes 8 des Kopfes 9 der Radschraube 6 an den kugelförmig ausgebildeten oberen Oberflächen 13 der Rippen 11 der strukturierten Oberfläche 10 des Versenks 7 konzentrisch an. Wird das Rad mit Radschrauben oder Radmuttern befestigt, die eine kegelförmige Fläche am Zentrierbund aufweisen, haben die oberen Oberflächen der Rippen die Form eines Teiles der Oberfläche eines gedachten Kegels, dessen Kegelwinkel mit dem der kegelförmigen Fläche des Zentrierbundes dieser Radschrauben oder Radmuttern übereinstimmt. Im montierten Zustand des Rades liegt die kegelförmige Fläche des Zentrierbundes dieser Radschrauben und Radmuttern koaxial an den kegelförmig gestalteten oberen Oberflächen der Rippen des Versenks an.

Wie aus Fig. 2 ersichtlich ist, liegt der Zentrierbund 8 nur an den Rippen 11, nicht aber am Boden der Nuten 12 an, wenn das Rad am Fahrzeug montiert ist.

Das Scheibenrad ist mit einer oder mehreren Schutzschichten versehen, um die Oberfläche des Rades vor Korrosion zu schützen und dem Rad auch ein ansprechendes Aussehen zu verleihen. Während der Oberflächenschutz im Versenkbereich des Rades durch eine Vorbehandlung, die in der Regel aus einer Zinkphosphatierung besteht, und einer sich daran anschließenden Grundierung der so vorbehandelten Oberfläche mit einem kathodischen Elektrotauchlack aufgebaut ist, kann außerhalb des Versenkbereiches bei Bedarf eine weitere Lackschicht auf die wie im Versenkbereich vorbehandelte und grundierte Oberfläche aufgetragen sein. Die oberen Oberflächen 13 der Rippen 11, die die Kontaktflächen für die Radschrauben 6 darstellen, weisen keine Lackschicht auf, während eine Lackschicht 14 an den seitlichen Oberflächen der Rippen 11 und am Boden der Nuten 12 vorhanden ist, wie Fig. 6 zeigt.

Die Radmuttern 6 sind durch eine Oberflächenbeschichtung ebenfalls korrosionsgeschützt. Eine bevorzugte Oberflächenbeschichtung der Radschrauben 6 wird durch eine Oberflächenbehandlung mit dem von der Firma Dacral unter dem Handelsnamen "DACROMET® 320+ PLUS L" vertriebenen Beschichtungsmittel erhalten. Radmuttern können durch eine Oberflächenbehandlung mit dem gleichen Mittel korrosionsgeschützt sein. Die für das erfindungsgemäße Scheibenrad verwendeten Radschrauben 6 sind in gleicher Ausführung auch für die Befestigung von Leichtmetallgußrädern, wie Aluminiumgußrädern, am Fahrzeug geeignet. Das gleiche gilt für Radmuttern.

Ist das erfindungsgemäße Scheibenrad am Fahrzeug montiert, liegen die mit der beschriebenen Oberflächenbeschichtung versehenen Radschrauben 6 direkt an den die Kontaktflächen des jeweiligen Versenks 7 bildenden oberen Oberflächen 13, die ohne Lackbeschichtung sind, an, wobei die Reibungszahl an den Kontaktflächen des Versenks auch im Fahrbetrieb im wesentlichen gleichbleibend und derart ist, daß sich die Radschrauben 6 im Fahrbetrieb nicht lösen können. Alle anderen Stellen des Versenks 7 und der übrigen Radbereiche, an denen die Radschrauben 6 im montierten Zustand nicht anliegen, wie die Bodenflächen der Nuten 12 und der radial innerhalb der strukturierten Oberfläche 10 liegende Oberflächenbereich des Versenks 7, tragen eine Lackbeschichtung, wie oben beschrieben.

Die Lackschicht kann von den die Kontaktflächen bildenden oberen Oberflächen 13 der Rippen 11 vor oder bei der Montage des Rades entfernt werden, wenn sie beim Lackieren des Versenkbereiches des Rades an den oberen Oberflächen 13 der Rippen 11 überhaupt erzeugt worden ist. Aus produktionstechnischen und wirtschaftlichen Gründen werden die oberen Oberflächen 13 der Rippen 11 bei der Erzeugung des Oberflächenschutzes des Versenkbereiches nicht ausgespart, sondern mitlackiert. Es ist möglich die Lackschicht von den oberen Oberflächen 13 der Rippen 11 vor der ersten Montage des Rades mittels eines geeigneten Werkzeuges zu entfernen. Vorzugsweise wird aber diese Lackschicht erst bei der ersten Montage des Rades durch die beim Anziehen der Radschrauben 6 entstehende Reibwirkung und durch den zunehmenden Druck der Radmuttern 6 auf diese Lackschicht entfernt. Der Lackabrieb kann von den Nuten 12 aufgenommen werden. Das gleiche würde beim Anziehen von Radmuttern passieren. Da sich die Kontaktflächen des Versenks auf die oberen Oberflächen 13 der Rippen 11 beschränken, entsteht eine wesentlich höhere Flächenpressung als wenn, wie beim Stande der Technik die gesamte Versenkfläche als Kontaktfläche für die Radschrauben oder Radmuttern zur Verfügung steht. Durch die erhöhte Flächenpressung werden die Rippen 11 plastisch deformiert, wodurch sich das Material der Rippen, insbesondere im Bereich der lackfreien Kontaktflächen, verfestigt. Diese Materialverfestigung erhöht das Lösedrehmoment der Radschrauben. Die plastische Deformation der Rippen 11 und die damit einhergehende Verfestigung des Materials im Bereich der oberen Oberflächen 13 treten beim ersten Anziehen der Radschrauben auf.

Die in den Figuren 7 bis 26 gezeigten Ausführungsbeispiele unterscheiden sich von dem in den Figuren 1 bis 6 gezeigten ersten Ausführungsbeispiel nur in der Form und Größe der strukturierten Oberfläche des jeweiligen Versenks. Im folgenden werden daher nur die Unterschiede zwischen dem ersten Ausführungsbeispiel und den weiteren Ausführungsbeispielen näher beschrieben, wobei Teile der weiteren Ausführungsbeispiele, die zu entsprechenden Teilen des ersten Ausführungsbeispiels ähnlich sind, mit den gleichen Bezugsziffern und mit zusätzlichen Buchstaben bezeichnet werden.

Bei allen weiteren Ausführungsbeispielen erstreckt sich im Gegensatz zu dem ersten Ausführungsbeispiel die strukturierte Oberfläche 10a, 10b, 10c, 10d und 10e über die gesamte Oberfläche des Versenks.

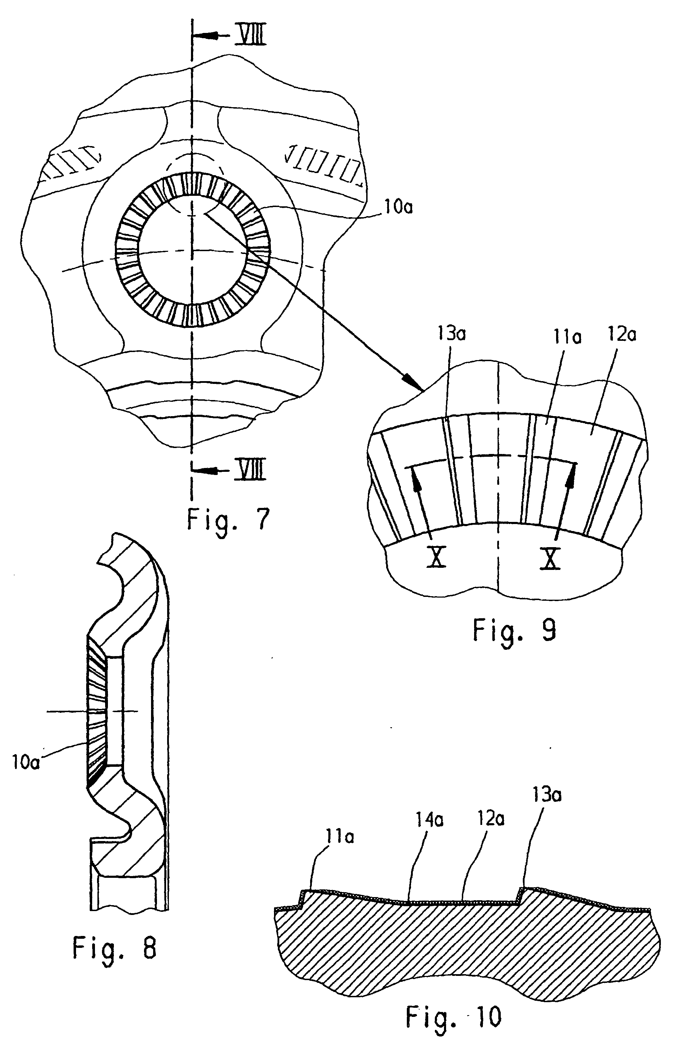

Bei dem in den Figuren 7 bis 10 gezeigten, zweiten Ausführungsbeispiel haben die die Erhabenheiten bildenden Rippen 11a eine Querschnittsform, die einem ungleichschenkligen Dreieck entspricht. Bei der in den Figuren 7 bis 10 gewählten Darstellung sind die steil abfallenden Flanken der Rippen 11a jeweils links von ihrem Scheitel angeordnet und sind somit der nach rechts weisenden Anziehrichtung der Radschrauben oder Radmuttern entgegengerichtet. Die flach abfallenden Flanken der Rippen 11a sind bei dieser Darstellung rechts von ihrem Scheitel angeordnet. Die jeweils zwischen zwei benachbarten Rippen 11a angeordneten Vertiefungen 12a haben, wie aus Fig. 9 ersichtlich, einen leicht konischen Verlauf mit in Radialrichtung nach innen abnehmender Breite. Die lackfreien Kontaktflächen 13a erstrecken sich bandförmig auf den Scheiteln der Rippen 11a. Die steilen Flanken und die flachen Flanken der Rippen 11a sowie der Boden der Vertiefungen 12a tragen eine Lackschicht 14a.

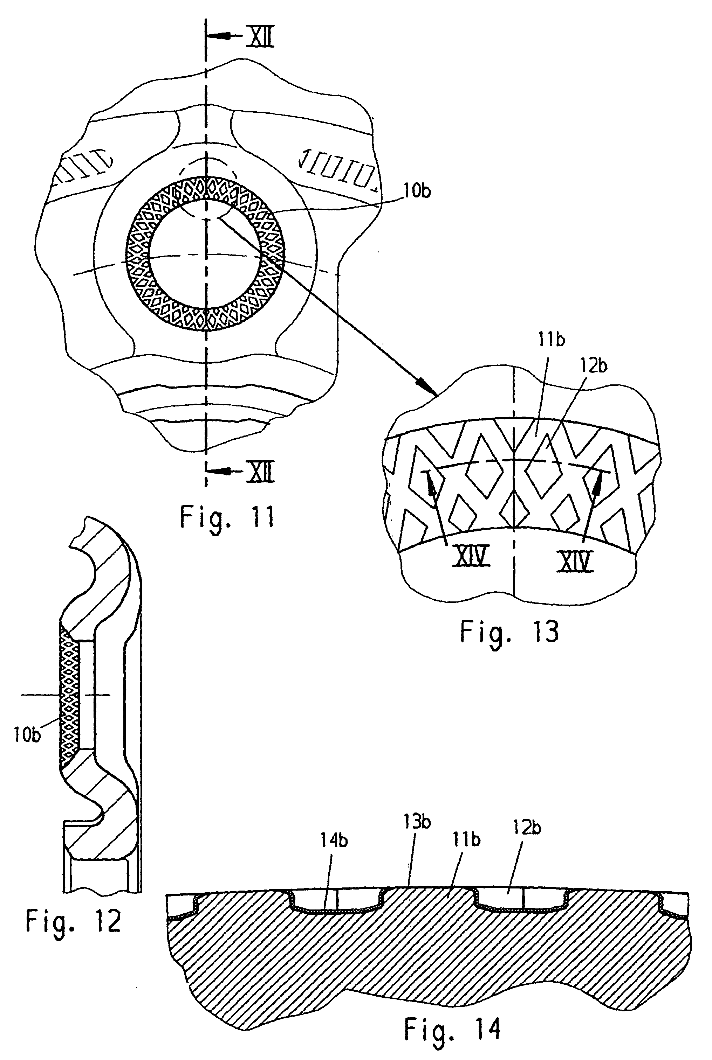

Bei dem in den Figuren 11 bis 14 dargestellten, dritten Ausführungsbeispiel, weist die strukturierte Oberfläche 10b des Versenks eine Vielzahl von in Umfangsrichtung und in Radialrichtung verteilt angeordneten rautenförmigen Vertiefungen 12b auf, die durch stegförmige Erhabenheiten 11b voneinander getrennt sind, die einen im wesentlichen rechteckigen Querschnitt haben. Die lackfreie Kontaktfläche 13b erstreckt sich auf der Oberseite einer jeden stegförmigen Erhabenheit 11b. Die Seitenflächen der stegförmigen Erhabenheiten 11b und die Bodenfläche der rautenförmigen Vertiefungen 12b weisen eine Lackschicht 14b auf.

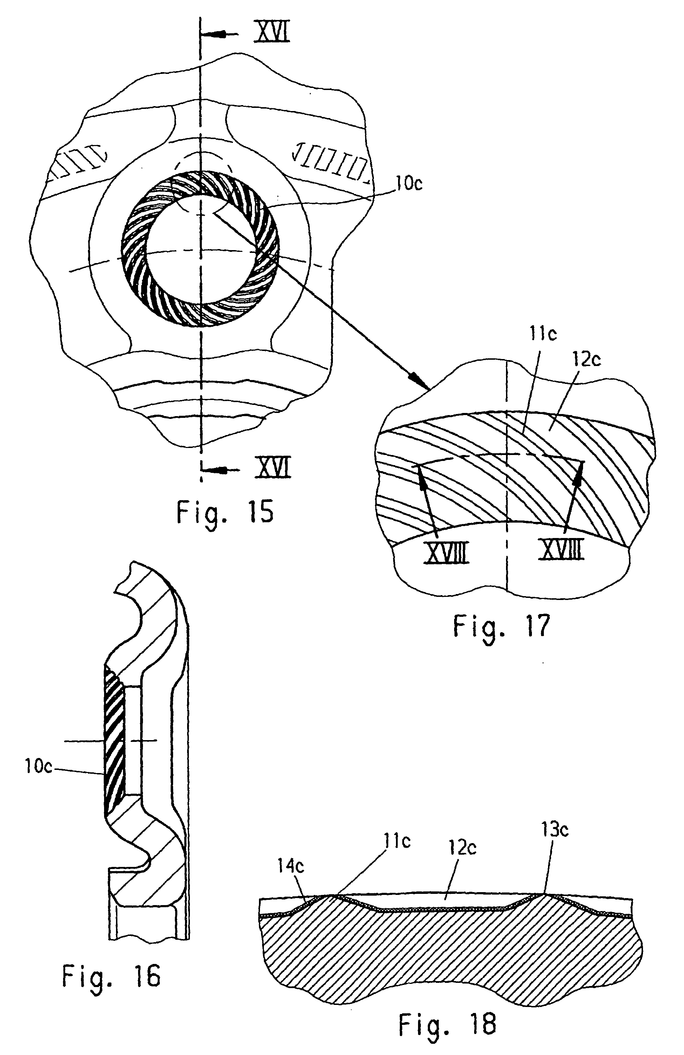

Bei dem in den Figuren 15 bis 18 dargestellten, vierten Ausführungsbeispiel weist die strukturierte Oberfläche 10c eine Vielzahl von in Umfangsrichtung verteilt angeordneten Rippen 11c auf, die einen bogenförmigen Verlauf haben und im Querschnitt dreieckig sind. Zwischen jeweils zwei benachbarten Rippen 11c befindet sich eine bogenförmig verlaufende Nut 12c. Der Querschnitt der Rippen 11c entspricht einem gleichschenkligen Dreieck. Die beiden Schenkel des Querschnittsdreiecks der Rippen 11c sind bis auf ihren scheitelnahen Bereich mit einer Lackschicht 14c versehen, die sich am Boden der Nuten 12c fortsetzt. Der Scheitelbereich jeder Rippe 11c bildet die lackfreie Kontaktfläche 13c.

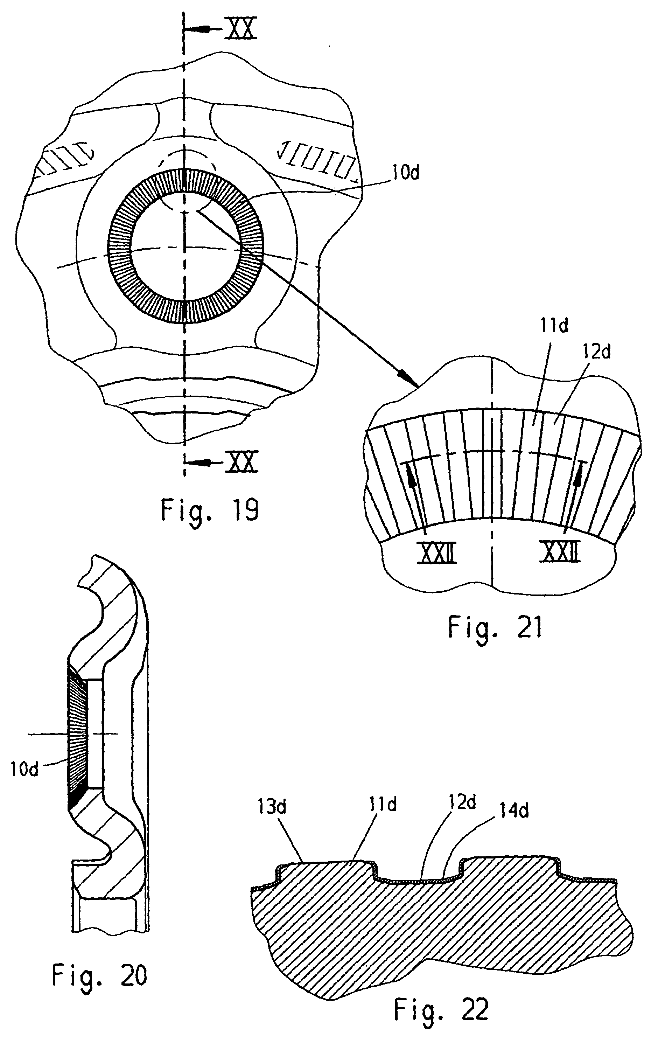

Bei dem in den Figuren 19 bis 22 dargestellten, fünften Ausführungsbeispiel sind die Vertiefungen und Erhabenheiten der strukturierten Oberfläche 10d jeweils nahezu identisch wie bei dem ersten Ausführungsbeispiel ausgebildet; sie unterscheiden sich von diesem nur in der radialen Länge, die sich, wie bereits erwähnt, über die gesamte Oberfläche des Versenks erstreckt. Die Erhabenheiten und Vertiefungen der strukturierten Oberfläche 10d bestehen aus Rippen 11d bzw. Nuten 12d. Die lackfreien Kontaktflächen 13d befinden sich an der Oberseite der im Querschnitt rechteckigen Rippen 11d. An den Seitenflächen der Rippen 11d und am Boden der Nuten 12d ist eine Lackschicht 14d aufgetragen.

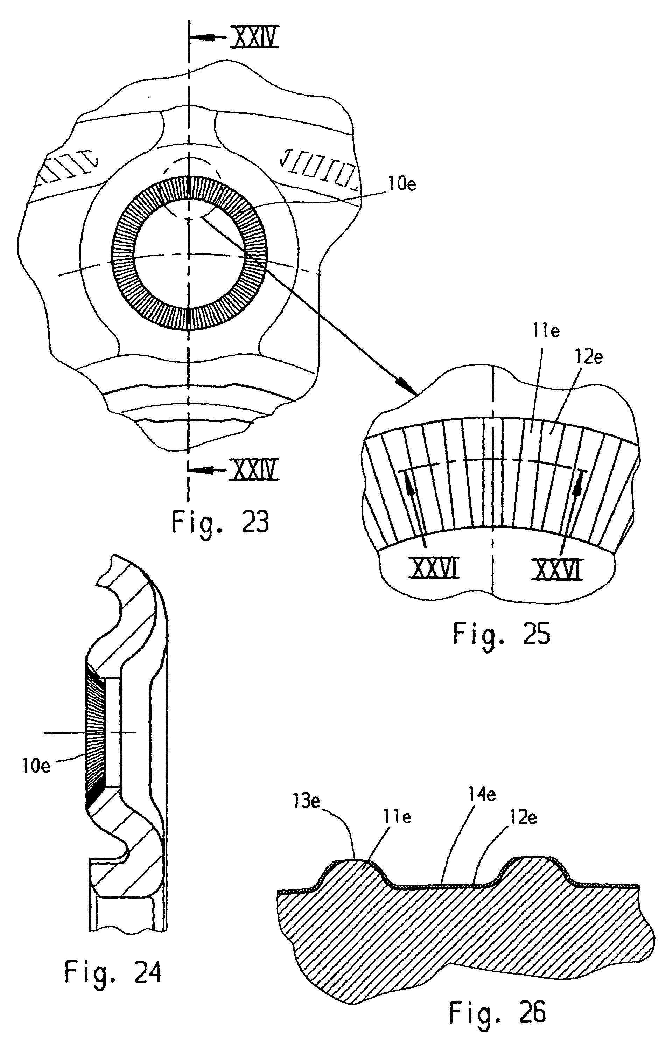

Bei dem in den Figuren 23 bis 26 gezeigten sechsten Ausführungsbeispiel haben die Rippen 11e gerundete, mit Lack beschichtete Seitenflächen und einen flachen Scheitel, der die lackfreie Kontaktfläche 13e bildet. Zwischen jeweils zwei radial geradlinig verlaufenden Rippen 11e befindet sich eine nutförmige Vertiefung 12e, die am Boden die Lackschicht 14e aufweist, die sich an den Seitenflächen der Rippen 11e fortsetzt.

Wie bei dem ersten Ausführungsbeispiel sind bei allen weiteren Ausführungsbeispielen die lackfreien Kontaktflächen entweder kugelförmig oder kegelförmig mit einem Kugeldurchmesser bzw. Kegelwinkel ausgebildet, der demjenigen des entsprechend geformten Zentrierbundes der Radmuttern oder Radschrauben entspricht.

## Patentansprüche

1. Scheibenrad aus Blech für Kraftfahrzeuge, mit einer Radschüssel (1), die mehrere auf einem Lochkreis (2) verteilt angeordnete Anschlußaugen (3) hat, die jeweils ein Durchgangsloch (4) und um das Loch herum ein Versenk (7) haben, das eine Oberfläche hat, von der wenigstens ein Teil durch nebeneinanderliegende Erhabenheiten (11) und Vertiefungen (12) strukturiert ist, wobei die Erhabenheiten (11) einen Oberflächenbereich (13) haben, an dem im montierten Zustand des Scheibenrades der Kopf (9) einer Radschraube (6) oder eine Radmutter anliegt, und wobei die Vertiefungen (12) einen relativ zu dem Oberflächenbereich (13) der Erhabenheiten (11) tiefer liegenden Oberflächenbereich haben, der Teil einer Lackschicht (14) ist, **dadurch gekennzeichnet, daß** der wenigstens eine Teil der Oberfläche des Versenks (7) durch mehr als zwei in Umfangsrichtung verteilt angeordnete Erhabenheiten (11) und neben den Erhabenheiten (11) liegenden Vertiefungen (12) strukturiert ist.

2. Scheibenrad nach Anspruch 1, **dadurch gekennzeichnet, daß** der relativ höher liegende Oberflächenbereich aus einer Vielzahl von Kontaktflächen (13) besteht, die zusammen die Form eines Teils eines Kegels oder einer Kugel haben.

3. Scheibenrad nach Anspruch 1 oder 2, **dadurch gekennzeichnet, daß** sich die beiden verschieden hohen Oberflächenbereiche des Versenks (7) nur an dessen oberen Rand befinden.

4. Scheibenrad nach einem der vorhergehenden Ansprüche, **dadurch gekennzeichnet, daß** die Erhabenheiten (11) rippenförmig und die Vertiefungen (12) nutenförmig ausgebildet und in Umfangsrichtung des jeweiligen Versenks (7) abwechselnd angeordnet sind.

5. Scheibenrad nach Anspruch 4, **dadurch gekennzeichnet, daß** die Erhabenheiten (11) und die Vertiefungen (12), in Axialrichtung auf eine Fläche projiziert, jeweils auf geraden Linien liegen, die von der Achse des jeweiligen Durchgangsloches (4) radial ausgehen.

6. Scheibenrad nach Anspruch 4, **dadurch gekennzeichnet, daß** die Erhabenheiten (11c) und die Vertiefungen (12c), in Axialrichtung auf eine Fläche projiziert, jeweils einen bogenförmigen Verlauf haben.

7. Scheibenrad nach einem der Ansprüche 4 bis 6, **dadurch gekennzeichnet, daß** die Erhabenheiten (11, 11a, 11b, 11c, 11d) im Querschnitt eine rechteckige oder dreieckige Form haben.

8. Scheibenrad nach Anspruch 2 oder 3, **dadurch gekennzeichnet, daß** die Kontaktflächen (13b) zusammenhängend sind und sich an stegförmigen Erhabenheiten (11b) befinden, die die Vertiefungen (12b) voneinander trennen.

9. Scheibenrad nach einem der vorhergehenden Ansprüche, **dadurch gekennzeichnet, daß** die Lackschicht (14) auf den Erhabenheiten (11) und in den Vertiefungen (12) vorgesehen ist.

10. Scheibenrad nach einem der Ansprüche 1 bis 9, **dadurch gekennzeichnet, daß** der relativ höher liegende Oberflächenbereich (13) im wesentlichen frei von Lack ist.

11. Verfahren zum Herstellen eines Scheibenrades aus Blech für Kraftfahrzeuge, wobei das Scheibenrad eine Radschüssel (1) aufweist, die mehrere auf einem Lochkreis (2) verteilt angeordnete Anschlußaugen (3) hat, die jeweils ein Durchgangsloch (4) und um das Loch herum ein Versenk (7) haben, das eine Oberfläche hat, von der wenigstens ein Teil durch nebeneinanderliegende Erhabenheiten (11) und Vertiefungen (12) strukturiert ist, wobei die Erhabenheiten (11) einen Oberflächenbereich (13) haben, an dem im montierten Zustand des Scheibenrades der Kopf (9) einer Radschraube (6) oder eine Radmutter anliegt, und wobei wenigstens die Vertiefungen (12) mit einer Lackschicht (14) versehen werden, die einen Oberflächenbereich hat, der relativ zu dem Oberflächenbereich (13) der Erhabenheiten (11) tiefer liegt, **dadurch gekennzeichnet, daß** der wenigstens eine Teil der Oberfläche des Versenks (7) durch mehr als zwei in Umfangsrichtung verteilt angeordnete Erhabenheiten (11) und neben den Erhabenheiten (11) liegenden Vertiefungen (12) strukturiert wird.

12. Verfahren nach Anspruch 11, **dadurch gekennzeichnet, daß** wenigstens die Erhabenheiten (11) und die Vertiefungen (12) mit der Lackschicht (14) versehen werden.

13. Verfahren nach Anspruch 12, **dadurch gekennzeichnet, daß** die Lackschicht (14) von dem relativ höher liegenden Oberflächenbereich (13) wieder abgetragen wird, während die den tiefer liegenden Oberflächenbereich aufweisende Lackschicht (14) intakt gelassen wird.

14. Verfahren nach Anspruch 13, **dadurch gekennzeichnet, daß** die Vertiefungen (12) genügend groß gemacht werden, daß sie die von dem relativ höher liegenden Oberflächenbereich abgetragene Lackschicht (14) in Form von Abrieb aufnehmen können.

15. Verfahren nach einem der Ansprüche 11 bis 14, **dadurch gekennzeichnet, daß** die Erhabenheiten (11) und Vertiefungen (12) durch Pressen gebildet werden.

16. Verfahren nach einem der Ansprüche 11 bis 15, **dadurch gekennzeichnet, daß** der wenigstens eine Teil (10b) der Oberfläche des Versenks (7) durch eine Vielzahl von Vertiefungen (12b) und stegförmigen Erhabenheiten (11b), die die Vertiefungen (12b) voneinander trennen, strukturiert wird, wobei die stegförmigen Erhabenheiten (11b) zusammenhängende Kontaktflächen (13b) haben.

## Claims

1. A sheet-metal disc wheel for motor vehicles comprising a wheel dish (1) comprising a number of connecting bosses (3) disposed over a pitch circle (2), each boss having a passage hole (4) surrounded by a countersink (7) having a surface, at least part of which is structured by side-by-side raised parts (11) and recesses (12), wherein the raised parts (11) have a surface region (13) which adjoins a wheel nut or the head (9) of a wheel screw (6) when the disc wheel is fitted, and wherein the recesses (12) have a surface region lower than the surface region (13) of the raised parts (11) and forming part of a paint layer (14), **characterised in that** the at least one part of the surface of the countersink (7) is structured by more than two peripherally distributed raised parts (11) and recesses (12) disposed next to the raised parts (11) .

2. A disc wheel according to claim 1, **characterised in that** the relatively higher surface region comprises a number of contact surfaces (13) which together have the shape of part of a cone or a sphere.

3. A disc wheel according to claim 1 or 2, **characterised in that** the two different-level surface regions of the countersink (7) are situated only at its top edge.

4. A disc wheel according to any of the preceding claims, **characterised in that** the raised parts (11) are in the form of ribs and the recesses (12) are in the form of grooves and alternate in the peripheral direction of the respective countersink.

5. A disc wheel according to claim 4, **characterised in that** the raised parts (11) and the recesses (12), in projection on to a surface in the axial direction, each lie on straight lines which extend radially from the axis of the respective passage hole (4).

6. A disc wheel according to claim 4, **characterised in that** the raised parts (11c) and the recesses (12c), in projection on to a surface in the axial direction, are both curved.

7. A disc wheel according to any of claims 4 to 6, **characterised in that** the raised parts (11, 11a, 11b 11c, 11d) are rectangular or triangular in cross-section.

8. A disc wheel according to claim 2 or 3, **characterised in that** the contact surfaces (13b) are continuous and are situated on web-like raised parts (11b) which divide the recesses (12b) from one another.

9. A disc wheel according to any of the preceding claims, **characterised in that** the paint layer (14) is provided on the raised parts (11) and in the recesses (12).

10. A disc wheel according to any of claims 1 to 9, **characterised in that** the relatively higher surface region (13) is substantially free from paint.

11. A method of producing a disc wheel of sheet metal for motor vehicles, wherein the disc wheel has a wheel dish (1) comprising a number of connecting bosses (3) distributed over a pitch circle (2) and each having a passage hole (4) surrounded by a countersink (7) which has a surface at least part of which is structured by side-by-side raised parts (11) and recesses (12), wherein the raised parts (11) have a surface region (13) which adjoins a wheel nut or the head (9) of a wheel screw (6) when the disc wheel is in the fitted state, and wherein at least the recesses (12) have a layer of paint (14) comprising a surface area which is lower than the surface area (13) of the raised parts (11), **characterised in that** the at least one part of the surface of the countersink (7) is structured by more than two peripherally distributed raised parts (11) and recesses (12) disposed next to the raised parts.

12. A method according to claim 11, **characterised in that** at least the raised parts (11) and the recesses (12) are given the coat of paint (14).

13. A method according to claim 12, **characterised in that** the paint (14) is removed from the relatively higher surface region (13) whereas the paint (14) on the lower surface region is left intact.

14. A method according to claim 13, **characterised in that** the recesses (12) are made large enough to hold the paint in abraded form after it has been removed from the relatively higher surface region.

15. A method according to any of claims 11 to 14, **characterised in that** the raised parts (11) and the recesses (12) are formed by pressing.

16. A method according to any of claims 11 to 15, **characterised in that** the at least one part (10b) of the surface of the countersink (7) is structured by a number of recesses (12b) and web-like raised parts (11b) separating the recesses (12b) from one another, the web-like raised parts (11b) having continuous contact surfaces (13b).

## Revendications

1. Roue à toile pleine en tôle pour véhicules à moteur, dotée d'un creux de roue (1), qui comprend plusieurs oeillets de raccordements (3) agencés de manière à être répartis sur un cercle de trou (2), lesquels oeillets présentent chacun un orifice de passage (4) et une partie renfoncée (7) autour de l'orifice, la partie renfoncée ayant une surface dont au moins une partie est structurée par des parties en relief (11) et des enfoncements (12) situés les uns à côté des autres, de telle manière que les parties en relief (11) présentent une zone de surface (13) sur laquelle s'appuie la tête (9) d'un boulon de fixation de la roue (6) ou un écrou de fixation de la roue, lorsque la roue à toile pleine est montée, et de telle manière que les enfoncements (12) présentent une zone de surface placée plus profondément par rapport à la zone de surface (13) des parties en relief (11), laquelle zone de surface constitue une partie d'une couche de laque ou de peinture (14), **caractérisée en ce qu'**au moins une partie de la surface de la partie renfoncée (7) est structurée par plus de deux parties en relief (11) agencées de manière à être réparties dans la direction périphérique et par plus de deux enfoncements (12) situés à côté des parties en relief (11).

2. Roue à toile pleine selon la revendication 1, **caractérisée en ce que** la zone de surface située relativement plus haut est constituée d'une pluralité de surfaces de contact (13), qui ont ensemble la forme d'une partie d'un cône ou d'une boule ou sphère.

3. Roue à toile pleine selon la revendication 1 ou 2, **caractérisée en ce que** les deux différentes zones de surfaces élevées de la partie renfoncée (7) se trouvent uniquement sur le bord supérieur de cette partie renfoncée.

4. Roue à toile pleine selon l'une des revendications précédentes, **caractérisée en ce que** les parties en relief (11) sont réalisées en forme de nervures et les enfoncements (12) sont réalisés en forme de rainures, et sont agencés de manière alternée dans la direction périphérique de chaque partie renfoncée (7).

5. Roue à toile pleine selon la revendication 4, **caractérisée en ce que** les parties en relief (11) et les enfoncements (12), selon une projection dans la direction axiale sur une surface, se trouvent chacun sur des lignes droites qui partent de manière radiale depuis l'axe de chaque orifice de passage (4).

6. Roue à toile pleine selon la revendication 4, **caractérisée en ce que** les parties en relief (11c) et les enfoncements (12c), selon une projection dans la direction axiale sur une surface, présentent chacun une forme arquée.

7. Roue à toile pleine selon les revendications 4 à 6, **caractérisée en ce que** les parties en relief (11, 11a, 11b, 11c, 11d) ont en coupe transversale une forme rectangulaire ou triangulaire.

8. Roue à toile pleine selon la revendication 2 ou 3, **caractérisée en ce que** les surfaces de contact (13b) sont contiguës et se trouvent au niveau des parties en relief (11b) en forme de nervures, lesquelles séparent les enfoncements (12b) les uns des autres.

9. Roue à toile pleine selon l'une des revendications précédentes, **caractérisée en ce que** la couche de laque (14) est prévue sur les parties en relief (11) et dans les enfoncements (12).

10. Roue à toile pleine selon l'une des revendications 1 à 9, **caractérisée en ce que** la zone de surface relativement plus élevée (13) est sensiblement exempte de laque.

11. Procédé de fabrication d'une roue à toile pleine en tôle pour des véhicules à moteur, dans lequel la roue à toile pleine présente un creux de roue (1), qui comprend plusieurs oeillets de raccordement (3) agencés de manière à être répartis sur un cercle de trous (2), lesquels oeillets possèdent chacun un orifice de passage (4) et une partie renfoncée (7) autour de l'orifice, laquelle partie renfoncée a une surface dont au moins une partie est structurée par des parties en relief (11) et des enfoncements (12) situés les uns à côté des autres, de manière que les parties en relief (11) présentent une zone de surface (13) sur laquelle s'appuie la tête (9) d'un boulon de fixation de la roue (6) ou un écrou de fixation de la roue, lorsque la roue à toile pleine est montée, et dans lequel les enfoncements (12) sont munis d'une couche de laque (14) qui a une zone de surface placée plus profondément par rapport à la zone de surface (13) des parties en relief (11), **caractérisé en ce qu'**au moins une partie de la surface de la partie renfoncée (7) est structurée par plus de deux parties en relief (11) agencées de manière à être réparties dans la direction périphérique et par plus de deux enfoncements (12) situés à côté des parties en relief (11).

12. Procédé selon la revendication 11, **caractérisé en ce qu'**au moins les parties en relief (11) et les enfoncements (12) sont dotés de la couche de laque (14).

13. Procédé selon la revendication 12, **caractérisé en ce que** la couche de laque (14) est de nouveau enlevée de la zone de surface située relativement plus haut (13), alors que la couche de laque (14) présentant la zone de surface située plus profondément reste intacte.

14. Procédé selon la revendication 13, **caractérisé en ce que** les enfoncements (12) sont conçus de manière à être assez grands pour qu'ils puissent recevoir la couche de laque (14), enlevée de la zone de surface située relativement plus haut, sous la forme de déchets d'abrasion.

15. Procédé selon l'une des revendications 11 à 14, **caractérisé en ce que** les parties en relief (11) et les enfoncements (12) sont formés par emboutissage.

16. Procédé selon l'une des revendications 11 à 15, **caractérisé en ce que** la au moins une partie (10b) de la surface de la partie renfoncée (7) est structurée par un grand nombre d'enfoncements (12b) et de parties en relief en forme de nervures (11b), lesquelles séparent les enfoncements (12b) les uns des autres, de telle manière que les parties en relief en forme de nervures (11b) comprennent des surfaces de contact contiguës (13b).
